# EUROPÄISCHE PATENTSCHRIFT

(11) **EP 1 953 997 B1**
(45) Veröffentlichungstag und Bekanntmachung des Hinweises auf die Patenterteilung: **11.04.2018**
(21) Anmeldenummer: 08001933.4
(22) Anmeldetag: 01.02.2008
(51) Int. Cl.: H04L 29/06, H04L 29/08, H04L 12/24, H04W 12/06, H04W 12/04, H04W 88/02

(54) **SYSTEM ZUM KONFIGURIEREN EINES TEILNEHMERIDENTIFIKATIONSMODULS**
SYSTEM FOR CONFIGURING A PARTICIPANT IDENTIFICATION MODULE
SYSTÈME DE CONFIGURATION D'UN MODULE D'IDENTIFICATION DE PARTICIPANTS

(30) Priorität: 02.02.2007 DE 102007006079
(43) Veröffentlichungstag der Anmeldung: 06.08.2008
(73) Patentinhaber: Vodafone Holding GmbH, 40213 Düsseldorf (DE)
(72) Erfinder: Müller, Frank, D-40237 Düsseldorf (DE); Jacobs, Holger, D-42349 Wuppertal (DE); Sohns, Christoph, D-47057 Duisburg (DE)
(74) Vertreter: Jostarndt Patentanwalts-AG

(56) Entgegenhaltungen:
- WO-A1-2006/054980

## Beschreibung

### Technisches Gebiet

Die Erfindung betrifft ein System zum Konfigurieren eines Teilnehmeridentifikationsmoduls mit einer Lese- und Schreibeinrichtung, die Lesezugriffe und Schreibzugriffe auf das Teilnehmeridentifikationsmodul ermöglicht, und einer Konfigurationseinrichtung, in der ausgelesene Daten des Teilnehmeridentifikationsmoduls auswertbar und in dem Teilnehmeridentifikationsmodul zu speichernde Daten bereitstellbar sind.

### Hintergrund und Stand der Technik

Mobilfunkendgeräte werden üblicherweise mit einem Teilnehmeridentifikationsmodul betrieben, das in das Mobilfunkendgerät eingesetzt wird. Hierbei handelt es sich um eine Mikroprozessorkarte, die beispielsweise im Zusammenhang mit GSM-Mobilfunknetzen (GSM: Global System for Mobile Communication) als SIM-Karte (SIM: Subscriber Identity Module) und im Zusammenhang mit UMTS-Mobilfunknetzen (UMTS: Universal Mobile Telecommunication System) als USIM-Karte (USIM: Universal Subscriber Identity Module) bezeichnet wird. Das Teilnehmeridentifikationsmodul enthält ein Sicherheitsmodul mit Identifikationsdaten des Mobilfunknutzers. Ferner enthält es weitere spezifische Daten, die beispielsweise das Zusammenwirken des Mobilfunkendgerätes mit verfügbaren Mobilfunknetzen bestimmen. So kann etwa eine von dem Mobilfunkanbieter bereitgestellte Liste mit bevorzugten oder gesperrten Mobilfunknetzen enthalten sein. Ferner befindet sich in dem Teilnehmeridentifikationsmodul in der Regel ein Speicher für persönliche Daten des Mobilfunknutzers, die teilweise auch von dem Mobilfunkanbieter voreingestellt werden können. So kann in dem Teilnehmeridentifikationsmodul beispielsweise ein Telefonbuch enthalten sein, das neben den vom Mobilfunknutzer gespeicherten Daten von dem Mobilfunkanbieter voreingestellte Servicenummern umfasst.

Vor der Auslieferung an den Mobilfunknutzer wird das Teilnehmeridentifikationsmodul in der Regel von dem Mobilfunkanbieter vorkonfiguriert. Dies geschieht üblicherweise in Verkaufsstellen oder einer anderen Einrichtung des Mobilfunkanbieters. Da sich Konfigurationsdaten mit der Zeit verändern oder Fehler bei der Vorkonfiguration auftreten können, besteht in den Verkaufsstellen des Mobilfunkanbieters zudem die Möglichkeit zur nachträglichen Konfiguration des Teilnehmeridentifikationsmoduls. Zur Durchführung der Konfiguration sind in den Verkaufsstellen Computer mit einem angeschlossenen Kartenleser vorhanden, der Lese- und Schreibzugriffe auf ein Teilnehmeridentifikationsmodul gestattet, wobei auf den Computern eine Software zur Konfiguration des Teilnehmeridentifikationsmoduls installiert ist. Teilweise kann die Konfiguration des Teilnehmeridentifikationsmoduls zumindest für einige Konfigurationseinstellungen auch von dem Mobilfunknutzer selbst mittels einer entsprechenden Software vorgenommen werden, die auf einem Computer des Nutzers installiert ist, an den ein Kartenleser angeschlossen ist.

Die WO 2006/054980 A1 offenbart z.B. ein solches System und ein Verfahren zur Programmierung und/oder Aktivierung eines Teilnehmeridentifizierungsmoduls für einen analogen Telefonadapter.

Hierbei besteht das Problem, dass Änderungen der in den Verkaufsstellen oder von dem Mobilfunknutzer verwendeten Software eine Softwareanpassung oder Neuinstallation in jedem Computer erforderlich machen. Derartigen Änderungen können etwa durch die Einführung neuer Teilnehmeridentifikationsmodule oder neuer Funktionen der Teilnehmeridentifikationsmodule bzw. der

Software veranlasst werden, oder wenn Fehler innerhalb der Software gefunden werden. Die Anpassung oder Neuinstallation der Software in jedem Computer ist dabei sowohl für die Softwarenutzer als auch für den Softwaredistributor mit einem hohen Aufwand verbunden und sehr kostenintensiv. Ferner erhält der Distributor, bei dem es sich etwa um den Mobilfunkanbieter handelt, in der Regel keine Rückmeldung über die korrekte Installation. Hierdurch kann eine fehlerfreie Installation der Software nicht zuverlässig sichergestellt werden, und mögliche Fehler bei der Installation können zu einer fehlerhaften Konfiguration des Teilnehmeridentifikationsmoduls und in der Folge zu unnötigen Servicefällen führen.

### Darstellung der Erfindung

Hiervon ausgehend ist es eine Aufgabe der Erfindung, ein System zum Konfigurieren eines Teilnehmeridentifikationsmoduls zu schaffen, das in einfacher und zuverlässiger Weise angepasst werden kann.

Erfindungsgemäß wird diese Aufgabe durch ein System mit den Merkmalen des Anspruchs 1 gelöst. Weiterbildungen der Erfindung sind in den Unteransprüchen angegeben.

Demgemäß wird ein System der eingangs genannten Art bereitgestellt, bei dem die Lese- und Schreibeinrichtung in einem Client enthalten ist, der über ein Netzwerk mit der Konfigurationseinrichtung verbindbar ist, wobei über das Netzwerk Lesezugriffe und Schreibzugriffe der Konfigurationseinrichtung auf das Teilnehmeridentifikationsmodul durchführbar sind, und wobei die Lese- und/oder Schreibzugriffe von dem Client aus beeinflussbar sind.

In dem System wird die Konfiguration eines Teilnehmeridentifikationsmoduls mittels einer Konfigurationseinrichtung vorgenommen, die über ein Netzwerk mit einem Client verbunden ist, der eine Lese- und Schreibeinrichtung aufweist. Dadurch erfolgt ein "Remotezugriff" der Konfigurationseinrichtung auf das Teilnehmeridentifikationsmodul, der beispielsweise über eine entsprechende Schnittstelle des Clients erfolgen kann. Über das Netzwerk kann die Konfigurationseinrichtung mit dem Teilnehmeridentifikationsmodul interagieren. Die Lese- und/oder Schreibzugriffe auf das Teilnehmeridentifikationsmodul können von dem Client aus beeinflusst werden, die Programmlogik zur Konfiguration ist jedoch vorteilhaft in der zentralen Konfigurationseinrichtung enthalten. Hierdurch muss bei Anpassungen der Programmlogik zur Konfiguration lediglich die Konfigurationseinrichtung angepasst werden, während die Lese- und Schreibeinrichtung ohne Anpassung weiter betrieben werden kann. Die Anpassung kann damit einfacher und zuverlässiger durchgeführt werden.

Bei einer Ausführungsform der Erfindung ist es vorgesehen, dass über das Netzwerk ein erstes Programmmodul bereitgestellt werden kann, das in dem Client ausführbar ist und eine Schnittstelle zwischen der Konfigurationseinrichtung und der Lese- und Schreibeinrichtung umfasst, über die Lese- und Schreibzugriffe der Konfigurationseinrichtung auf das Teilnehmeridentifikationsmodul durchführbar sind.

In dieser Ausführungsform ist die Konfigurationseinrichtung mit der Lese- und Schreibeinrichtung über eine Schnittstelle verbunden, die vorteilhaft in einem Programmmodul enthalten ist, das ebenfalls von der Konfigurationseinrichtung bereitgestellt wird. Hierdurch braucht der Client nicht über eine fest installierte Schnittstelle verfügen. Insbesondere kann zudem eine Anpassung der Schnittstelle zentral in der Konfigurationseinrichtung vorgenommen werden, was die Anpassung des Gesamtsystems weiter vereinfacht.

Eine Ausgestaltung der Erfindung sieht zudem vor, dass die Lese- und/oder Schreibzugriffe der Konfigurationseinrichtung auf das Teilnehmeridentifikationsmodul mittels des ersten Programmmoduls von dem Client aus beeinflussbar sind.

Vorteilhaft ermöglicht das von der Konfigurationseinrichtung bereitgestellte Programmmodul in dieser Ausgestaltung auch die Beeinflussung der Konfiguration des Teilnehmeridentifikationsmoduls von dem Client aus. Das Programmmodul bildet damit eine Benutzerschnittstelle. Eine Anpassung der Benutzerschnittstelle kann bei dieser Ausgestaltung im Bereich der Konfigurationseinrichtung erfolgen, wodurch die Anpassung des Systems weiter vereinfacht wird.

Eine Weiterbildung der Erfindung beinhaltet, dass eine Supporteinrichtung über das Netzwerk mit der Konfigurationseinrichtung verbunden ist, wobei die Lesezugriffe und/oder die Schreibzugriffe der Konfigurationseinrichtung auf das Teilnehmeridentifikationsmodul von der Supporteinrichtung aus mittels eines zweiten, in der Supporteinrichtung ausführbaren Programmmoduls beeinflussbar sind.

Vorteilhaft ist bei dieser Weiterbildung eine Supporteinrichtung in das System integriert, von der aus der Benutzer des Clients bei der Konfiguration eines Teilnehmeridentifikationsmoduls unterstützt werden kann. Die Supporteinrichtung ist in der Weise in das System eingebunden, dass von der Supporteinrichtung aus die Lese- und Schreibzugriffe der Konfigurationseinrichtung auf das Teilnehmeridentifikationsmodul beeinflusst werden können. Die Integration der Supporteinrichtung in das System kann damit besonders einfach vorgenommen werden.

Vorzugsweise wird das zweite Programmmodul ebenfalls von der Konfigurationseinrichtung bereitgestellt. Damit sind auch Anpassungen im Bereich der Supporteinrichtung einfach und zuverlässig durchführbar.

Das erste und das zweite Programmmodul können verschieden sein. Sie können jedoch auch durch entsprechende Anpassungen aus einem generischen Programmmodul erzeugt werden.

Eine Ausführungsform der Erfindung zeichnet sich dadurch aus, dass die Konfigurationseinrichtung einen Lesezugriff und/oder einen Schreibzugriff auf ein Datenelement der Daten des Teilnehmeridentifikationsmoduls in Abhängigkeit von einer Zugriffsberechtigung des Bedieners des Clients zulässt.

Vorteilhaft wird bei dieser Ausführungsform eine Berechtigung des Bedieners der Lese- und Schreibeinrichtung für einen Lese- und/oder Schreibzugriff auf Daten des Teilnehmeridentifikationsmoduls geprüft. Ein derartiger Zugriff auf die Daten wird nur für einen berechtigten Bediener zugelassen. Hierdurch wird die Gefahr missbräuchlicher Zugriffe auf ein Teilnehmeridentifikationsmodul verringert und die Sicherheit des Systems erhöht.

Eine weitere Ausführungsform der Erfindung sieht vor, dass das erste Programmmodul eine Benutzerschnittstelle zum Beeinflussen der Lese- und/oder Schreibzugriffe auf das Teilnehmeridentifikationsmodul bereitstellt, die in Abhängigkeit von der Zugriffsberechtigung des Bedieners der Lese- und Schreibeinrichtung bezüglich des Datenelements veränderbar ist.

Vorteilhaft kann bei dieser Ausführungsform die Zulässigkeit eines Zugriffs auf ein Datenelement des Teilnehmeridentifikationsmoduls in einfacher und zuverlässiger Weise durch eine entsprechende Ausgestaltung bzw. Anpassung einer von dem Programmmodul bereitgestellten Benutzerschnittstelle sichergestellt werden. Vorzugsweise ist die Benutzerschnittstelle als grafische Benutzeroberfläche ausgebildet.

Ferner ist eine Weiterbildung der Erfindung dadurch gekennzeichnet, dass mittels des zweiten Programmmoduls eine Steuerung von Lese- und Schreibzugriffen der Konfigurationseinrichtung auf das Teilnehmeridentifikationsmodul bezüglich aller Datenelemente der Daten des Teilnehmeridentifikationsmoduls durchführbar ist.

Vorteilhaft stellt diese Weiterbildung sicher, dass von der Supporteinrichtung aus Zugriff auf sämtliche Daten des Teilnehmeridentifikationsmoduls erfolgen kann, so dass eine zuverlässige Unterstützung des Bedieners des Clients bei einer Vielzahl von Problemen erfolgen kann.

Weiterhin beinhaltet eine Ausgestaltung der Erfindung, dass die Lesezugriffe und/oder die Schreibzugriffe der Konfigurationseinrichtung auf das Teilnehmeridentifikationsmodul von der Supporteinrichtung aus beeinflussbar sind, nachdem eine entsprechende Anforderung von dem Client an die Supporteinrichtung und/oder die Konfigurationseinrichtung übermittelt worden ist.

Die Ausgestaltung ermöglicht vorteilhaft Lese- und Schreibzugriffe auf das Teilnehmeridentifikationsmodul von der Supporteinrichtung aus, nachdem eine entsprechende Anforderung von dem Client empfangen worden ist. Damit kann eine Unterstützung durch die Supporteinrichtung gezielt von dem Bediener der Lese- und Schreibeinrichtung angefordert werden.

Darüber hinaus ist es bei einer Weiterbildung der Erfindung vorgesehen, dass mittels der Konfigurationseinrichtung eine vor der Ausgabe eines Teilnehmeridentifikationsmoduls an einen Kunden erfolgende Aktivierung des Teilnehmeridentifikationsmoduls durchführbar ist.

Diese Weiterbildung ermöglicht mit Vorteil die Aktivierung des Teilnehmeridentifikationsmoduls mittels der Konfigurationseinrichtung. Unter einer Aktivierung wird dabei die erstmalige Speicherung von dem Kunden zugeordneten Daten in dem Teilnehmeridentifikationsmodul verstanden. Üblicherweise wird die Aktivierung eines Teilnehmeridentifikationsmoduls in einer Verkaufsstelle des Mobilfunkanbieters vorgenommen.

Nach der Aktivierung wird das Teilnehmeridentifikationsmodul an den Kunden ausgegeben, so dass das Teilnehmeridentifikationsmodul den Bestand der Verkaufsstelle verlässt.

Bei einer Ausgestaltung der Erfindung ist es daher vorgesehen, dass die Konfigurationseinrichtung nach der Aktivierung eines Teilnehmeridentifikationsmoduls einen Bestellvorgang für ein Teilnehmeridentifikationsmodul auslöst.

Bei dieser Ausgestaltung kann vorteilhaft eine Bestandsverwaltung für in einer Verkaufsstelle vorgehaltenen Teilnehmeridentifikationsmodulen in der zentralen Konfigurationseinrichtung durchgeführt werden. Insbesondere wird nach der Aktivierung eines Teilnehmeridentifikationsmoduls ein Bestellvorgang für ein unbeschriebenes Teilnehmeridentifikationsmodul ausgelöst, um den Bestand in der Verkaufsstelle wieder aufzufüllen.

Die genannten und weitere Vorteile, Besonderheiten und zweckmäßige Ausgestaltungen der Erfindungen werden auch anhand der Ausführungsbeispiele deutlich, die im Folgenden unter Bezugnahme auf die Figur beschrieben werden.

### Kurze Beschreibung der Figur

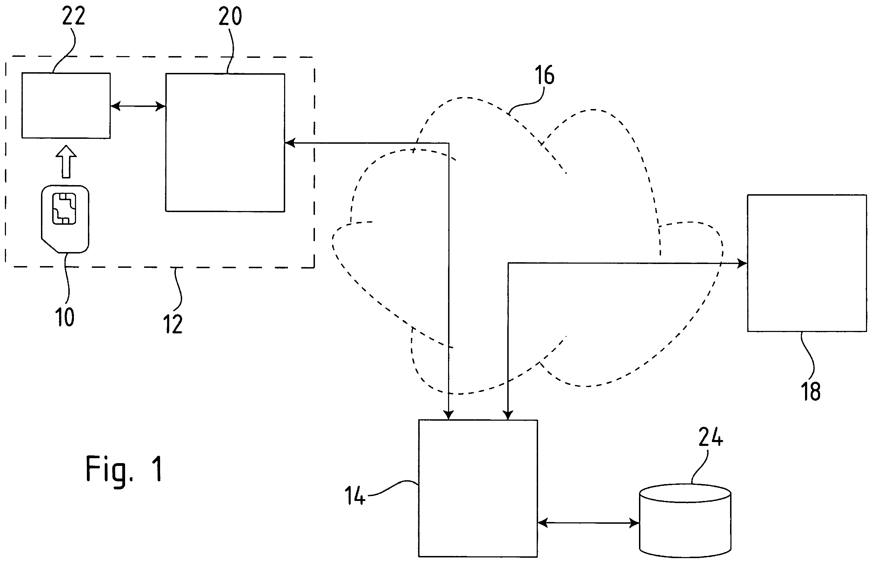

Fig. 1 zeigt eine schematische Darstellung eines Systems zum Konfigurieren eines Teilnehmeridentifikationsmoduls.

### Darstellung von Ausführungsbeispielen

In Figur 1 ist in schematischer Darstellung ein System zum Konfigurieren eines Teilnehmeridentifikationsmoduls 10 veranschaulicht. Das System umfasst einen Client 12 und eine Konfigurationseinrichtung 14, die über ein Netzwerk 16 miteinander verbunden sind. Bei dem Netzwerk 16 handelt es sich vorzugsweise um das Internet. Obwohl in Figur 1 lediglich ein Client 12 dargestellt ist, umfasst das System vorzugsweise eine Vielzahl von Clients 12, die über das Netzwerk 16 mit der Konfigurationseinrichtung 14 verbunden sind. Darüber hinaus umfasst das System eine Supporteinrichtung 18, die in der dargestellten Ausführungsform über das Netzwerk 16 mit der Konfigurationseinrichtung 14 verbunden ist. Gleichfalls kann es jedoch auch vorgesehen sein, dass die Supporteinrichtung 18 in anderer Weise, beispielsweise über ein Intranet, mit der Konfigurationseinrichtung 14 verbunden ist. Obwohl in Figur 1 nur eine Supporteinrichtung 18 gezeigt ist, sind vorzugsweise mehrere Supporteinrichtungen 18 mit der Konfigurationseinrichtung 14 verbunden.

Bei dem Teilnehmeridentifikationsmodul 10 handelt es sich um eine Chipkarte, die beispielsweise als SIM-Karte oder USIM-Karte ausgestaltet ist. Das Teilnehmeridentifikationsmodul weist einen Speicher auf, in dem Identifikationsdaten eines Mobilfunknutzers und Daten, die zum Einbuchen eines mobilen Endgeräts in ein Mobilfunknetz benötigt werden, gespeichert sind. Hierbei kann es sich etwa um eine IMSI (International Mobile Subscriber Identity) handeln. Ferner kann in dem Speicher ein Telefonbuch enthalten sein, in dem Daten von dem Mobilfunknutzer gespeichert werden können. Zudem können in dem Speicher Applikationen gespeichert werden. Bei den Applikationen handelt es sich um Programmmodule, die in einem Mobilfunkendgerät ausführbar sind. Bevor das Teilnehmeridentifikationsmodul 10 von einem Mobilfunknutzer verwendet werden kann, ist eine Aktivierung durch den Mobilfunkanbieter erforderlich. Bei der Aktivierung werden dem Mobilfunknutzer zugeordnete Daten, wie insbesondere die IMSI, in dem Teilnehmeridentifikationsmodul 10 gespeichert. Die Aktivierung entspricht damit einer Personalisierung des Teilnehmeridentifikationsmoduls 10. Nach der Aktivierung kann das Teilnehmeridentifikationsmodul 10 in ein Mobilfunkendgerät eingesetzt werden, welches dann innerhalb des Mobilfunknetzes genutzt werden kann. Darüber hinaus können von dem Mobilfunkanbieter weitere Daten des Teilnehmeridentifikationsmoduls 10 vorkonfiguriert werden. Diese Daten umfassen von dem Mobilfunkanbieter vorgegebene Telefonbucheinträge und von dem Mobilfunkanbieter bereitgestellte Applikationen.

Mittels des Clients 12 wird die Aktivierung des Teilnehmeridentifikationsmoduls 10 vorgenommen. Ferner kann von dem Client 12 aus die weitere Vorkonfiguration und/oder eine nachträgliche Konfiguration des Teilnehmeridentifikationsmoduls 10 erfolgen, bei der die Ausgangskonfiguration geändert bzw. ergänzt wird. Der Client 10 umfasst eine Computereinheit 20, die mit dem Netzwerk 16 verbunden ist. Die Computereinheit 20 weist einen Prozessor auf, der mit einer Anzeigeeinrichtung und einer Eingabeeinrichtung verbunden ist. Ferner weist die Computereinheit 20 einen Speicher auf, in dem eine Browsersoftware zur Darstellung von Webseiten gespeichert ist, die mittels des Prozessors ausführbar ist. Weiterhin verfügt der Client 12 über eine Programmausführungsumgebung zum Ausführen von Webapplikationen. Die Programmausführungsumgebung kann Bestandteil der Browsersoftware oder als eigenständige Software ausgeführt sein.

Die Computereinheit 20 ist mit einem Chipkartenleser 22 verbunden, der dazu ausgelegt ist, das Teilnehmeridentifikationsmodul 10 aufzunehmen. Mit dem Chipkartenleser 22 können Daten aus dem Teilnehmeridentifikationsmodul 10 ausgelesen und Daten in dem Teilnehmeridentifikationsmodul 10 gespeichert werden.

Bei der Computereinheit 20 handelt es sich bei einer Ausführungsform um einen PC (Personal Computer), an den der Chipkartenleser 22 angeschlossen ist. Der PC kann in einer Verkaufsstelle des Mobilfunkanbieters oder bei dem Mobilfunknutzer betrieben werden. In einer weiteren Ausführungsform können Computereinheit 20 und Chipkartenleser 22 sich in einem Selbstbedienungsterminal des Mobilfunkanbieters befinden, der in einer Verkaufstelle oder an einem Ort aufgestellt ist. Ferner kann es sich bei dem Client 12 auch um ein Mobilfunkendgerät, wie beispielsweise in Mobiltelefon, handeln, welches über eine Computereinheit 20 sowie einen Chipkartenleser verfügt und über das Mobilfunknetz mit dem Netzwerk 16 verbunden ist. Voraussetzung hierfür ist allerdings, dass das Teilnehmeridentifikationsmodul 10 bereits die Daten enthält, die für das Einbuchen in das Mobilfunknetz erforderlich sind. D.h., in dieser Ausführungsform kann eine erstmalige Vorkonfiguration und Aktivierung des Teilnehmeridentifikationsmoduls 10 nicht ausgeführt werden.

Die Supporteinrichtung 18 weist vorzugsweise gleichfalls eine Computereinrichtung auf, die über eine Anzeigeeinrichtung und eine Eingabeeinrichtung verfügt. In einem Speicher der Computereinrichtung ist ebenfalls eine Browsersoftware gespeichert, die mittels eines Prozessors ausführbar ist. Vorzugsweise verfügt auch die Supporteinrichtung 18 über eine Programmausführungsumgebung zum Ausführen von Webapplikationen. In einer Ausführungsform wird die Supporteinrichtung 18 in einem zentralen Supportzentrum des Mobilfunkanbieters betrieben.

Die Konfigurationseinrichtung 14 ist als ein Webserver ausgestaltet. Von der Konfigurationseinrichtung 14 werden ein oder mehrere verschiedene vorzugsweise als Webapplikationen ausgebildete Programmmodule zum Konfigurieren von Teilnehmeridentifikationsmodulen bereitgestellt, die von der Computereinheit 20 des Clients 12 über das Netzwerk 16 abgerufen werden können. Vorzugsweise wird die Konfigurationseinrichtung zentral betrieben - beispielsweise durch den Mobilfunkanbieter.

Die Programmmodule stellen eine Schnittstelle für Lese- und Schreibzugriffe der Konfigurationseinrichtung auf ein in dem Kartenleser 22 befindliches Teilnehmeridentifikationsmodul 10 bereit. Über diese Schnittstelle werden die mittels des Kartenlesers 22 aus dem Teilnehmeridentifikationsmodul 10 ausgelesenen Daten über das Netzwerk 16 an die Konfigurationseinrichtung 14 übermittelt. Ferner werden in der Konfigurationseinrichtung 14 erzeugte oder veränderte Konfigurationsdaten über das Netzwerk 16 an den Client 12 gesendet. Im Bereich des Clients 12 werden diese Daten mittels des dort in der Computereinheit 20 ausgeführten Programmmoduls empfangen und an den Kartenleser 22 weitergeleitet, der die Daten in das Teilnehmeridentifikationsmodul 10 schreibt.

Ferner stellen die Programmmodule an der Computereinrichtung 20 eine Benutzerschnittstelle in Form einer grafischen Benutzeroberfläche bereit. Über die Benutzerschnittstelle kann der Benutzer der Computereinrichtung 20 die Konfiguration des Teilnehmeridentifikationsmoduls 10 steuern. Insbesondere können an der Benutzerschnittstelle Daten angezeigt werden, die aus dem Teilnehmeridentifikationsmodul 10 ausgelesen werden. Ferner können Daten, die in dem Teilnehmeridentifikationsmodul gespeichert werden sollen, angezeigt und manipuliert werden. Zur Manipulation der Konfigurationsdaten umfasst die Benutzerschnittstelle Eingabefelder, in die Daten mittels der Eingabeeinrichtung der Computereinheit 20 eingegeben werden können. Darüber hinaus erlaubt die Benutzerschnittstelle die Eingabe von Steuerbefehlen zur Konfiguration des Teilnehmeridentifikationsmoduls 10. Beispielsweise können Steuerbefehle zum Auslesen der in dem Teilnehmeridentifikationsmodul 10 gespeicherten Daten oder zur Speicherung von neuen bzw. veränderten Daten in dem Teilnehmeridentifikationsmodul eingegeben werden.

Bei den Programmmodulen handelt es sich um eine "kleine" Software, die rasch über das Netzwerk 16 übertragen werden kann, ohne eine zu große Netzlast zu verursachen. Die Konfigurationseinrichtung 14 stellt den Systemkern des Konfigurationssystems dar. Dabei interagiert die Konfigurationseinrichtung 14 mit dem Teilnehmeridentifikationsmodul 10, um dieses zu konfigurieren. D.h., bei der Konfiguration werden gegebenenfalls in dem Teilnehmeridentifikationsmodul 10 gespeicherte Daten durch den Kartenleser 22 ausgelesen, über das Netzwerk 16 an die Konfigurationseinrichtung 10 übermittelt, dort manipuliert und dann zur Speicherung in dem Teilnehmeridentifikationsmodul 10 über das Netzwerk zurück an den Kartenleser 22 gesendet. Neue Konfigurationsdaten werden in der Konfigurationseinrichtung 22 erzeugt und zur Speicherung in dem Teilnehmeridentifikationsmodul 10 über das Netzwerk an den Kartenleser 22 gesendet. Die Erzeugung und Manipulation von Konfigurationsdaten ist dabei über das Programmmodul von dem Client 12 aus steuerbar und überwachbar.

Die Programmlogik zur Konfiguration des Teilnehmeridentifikationsmoduls 10 ist somit in der zentralen Konfigurationseinrichtung 14, vorzugsweise in Form einer entsprechenden Software, enthalten. Mittels der Programmlogik bestimmt die Konfigurationseinrichtung 14 aufgrund der aus dem Teilnehmeridentifikationsmodul 10 ausgelesenen Konfigurationsdaten insbesondere den Typ der Chipkarte. In Abhängigkeit von dem Kartentyp kann dann beispielsweise bestimmt werden, welchen Dateninhalt das Teilnehmeridentifikationsmodul 10 aufweist. Entsprechend des Kartentyps können beispielsweise ferner Datenformate und Speicherorte der in dem Teilnehmeridentifikationsmodul 10 zu speichernden Daten festgelegt werden. Die Daten werden dann in dem ermittelten Format an den Kartenleser 22 gesendet und in dem Format innerhalb des Teilnehmeridentifikationsmoduls 10 gespeichert.

Spezifische Daten der Teilnehmeridentifikationsmodule 10 werden innerhalb einer mit der Konfigurationseinrichtung 14 verbundenen oder in der Konfigurationseinrichtung 14 enthaltenen Datenbank 24 gespeichert. In der Datenbank 24 werden insbesondere die jeweils aktuell in den Teilnehmeridentifikationsmodulen 10 gespeicherten Daten in jeweils einem Datensatz hinterlegt. Der ein bestimmtes Teilnehmeridentifikationsmodul 10 betreffende Datensatz kann dabei beispielsweise mit einer eindeutigen Kennung des Teilnehmeridentifikationsmoduls 10, wie etwa der IMSI, gekennzeichnet sein. In der Datenbank 24 kann zudem die Historie der Änderungen der Konfigurationsdaten der Teilnehmeridentifikationsmodule 10 hinterlegt werden. Aus der Änderungshistorie geht hervor, welcher Benutzer welche Konfigurationsdaten des Teilnehmeridentifikationsmoduls 10 wann verändert oder hinzugefügt hat.

Ferner können in der Datenbank 24 Konfigurationsdaten gespeichert werden, die aktuell nicht in dem Teilnehmeridentifikationsmodul 10 gespeichert sind, jedoch bei der nächsten Konfiguration in dem Teilnehmeridentifikationsmodul 10 gespeichert werden sollen. Bei diesen Daten kann es sich um Ergänzungsdaten handeln, die in dem Teilnehmeridentifikationsmodul 10 gespeichert werden sollen, oder um Aktualisierungen bereits vorhandener Daten, welche die vorhandenen Daten ersetzen sollen. In dem Konfigurationssystem ist von den Clients 12 aus vorzugsweise die Vorkonfiguration, die Aktivierung sowie die nachträgliche Konfiguration eines Teilnehmeridentifikationsmoduls 10 möglich, wobei für diese beiden Aufgaben ein gemeinsames Programmmodul oder unterschiedliche Programmmodule bereitgestellt werden können. Bei der nachträglichen Konfiguration des Teilnehmeridentifikationsmoduls 10 lassen sich grundsätzlich alle enthaltenen Daten verändern. Insbesondere können die Daten zum Einbuchen in das Mobilfunknetz angepasst werden und Einträge des Telefonbuchs lassen sich verändern oder ergänzen. Ferner können in dem Teilnehmeridentifikationsmodul 10 gespeicherte Applikationen im Rahmen von Updates angepasst werden, Applikationen können gelöscht werden und zusätzliche Applikationen können ergänzt werden. Auch das vollständige überschreiben von in dem Teilnehmeridentifikationsmodul 10 Daten mit neuen Daten kann durchgeführt werden.

Verschiedene Nutzergruppen haben vorzugsweise unterschiedliche Rechte für den Zugriff auf die Funktionen zur Konfiguration eines Teilnehmeridentifikationsmoduls 10. So kann es beispielsweise vorgesehen sein, dass die Aktivierung eines Teilnehmeridentifikationsmoduls 10 nur von Clients 12 aus erfolgen kann, die in einer Verkaufsstelle des Mobilfunkanbieters betrieben oder von dem Personal der Verkaufsstelle bedient werden. Ferner sind verschiedenen Nutzergruppen in Bezug auf die nachträgliche Konfiguration vorzugsweise unterschiedliche Berechtigungen für Lese- und Schreibzugriffe auf die einzelnen Datenelemente der in dem Teilnehmeridentifikationsmodul 10 gespeicherten Daten zugeordnet. Beispielsweise kann es vorgesehen sein, dass die Daten zum Einbuchen in das Mobilfunknetz nicht von einem Mobilfunknutzer, sondern nur durch das Personal des Mobilfunknutzers eingesehen und/oder verändert werden können. Gleichfalls kann es vorgesehen sein, dass persönliche Daten des Mobilfunknutzers, die beispielsweise innerhalb des Telefonbuchs gespeichert sind, nicht von dem Personal des Mobilfunkanbieters, sondern nur von dem Mobilfunknutzer eingesehen und/oder verändert werden können.

Aufgrund der unterschiedlichen Berechtigung verschiedener Nutzer ist es vorgesehen, dass die Benutzer der Computereinrichtung 20 sich gegenüber der Konfigurationseinrichtung 14 identifizieren und authentifizieren. Dies erfolgt beispielsweise über eine dem Benutzer zugeordnete Benutzerkennung und ein zugehöriges Authentifizierungsmerkmal. Als Authentifizierungsmerkmale können beispielsweise Passworte oder biometrische Merkmale des Benutzers eingesetzt werden. Alternativ kann sich ein Benutzer auch über eine Kennung seiner Benutzergruppe identifizieren und über ein der Benutzergruppe zugeordnetes Authentifizierungsmerkmal authentifizieren.

Die Verwaltung der Benutzer erfolgt innerhalb der Konfigurationseinrichtung 14. Dort ist, beispielsweise in der Datenbank 24, für jede Benutzergruppe ein Berechtigungsprofil gespeichert. In dem Berechtigungsprofil sind die Funktionen angegeben, auf die Benutzer der entsprechenden Benutzergruppe Zugriff haben. Ferner sind die Zugriffsrechte der von der Benutzergruppe umfassten Benutzer zum Lesen- und/oder Schreiben von Daten des Teilnehmeridentifikationsmoduls 10 angegeben. Darüber hinaus enthält die Benutzerverwaltung gegebenenfalls eine Zuordnung zwischen den einzelnen Benutzern des Systems und den Benutzergruppen.

In Abhängigkeit von der Berechtigung eines Benutzers für einen Zugriff auf Funktionen der Konfigurationseinrichtung 14 und auf Daten des Teilnehmeridentifikationsmoduls 10 wird vorzugsweise das Programmmodul angepasst, das von der Konfigurationseinrichtung 14 an der von dem Benutzer bedienten Computereinrichtung 20 bereitgestellt wird. Das Programmmodul ist dabei so ausgestaltet, dass es keinen Zugriff auf Funktionen und Daten gestattet, für die der Benutzer keine Zugriffsberechtigung hat. Dies geschieht in einer Ausgestaltung durch eine entsprechende Anpassung der von dem Programmmodul bereitgestellten grafischen Benutzeroberfläche. So enthält die grafische Benutzeroberfläche beispielsweise nur Datenfelder für Daten des Teilnehmeridentifikationsmoduls 10, auf die der Benutzer Zugriff hat. Funktionen zur Konfiguration können von dem Benutzer beispielsweise durch die Betätigung einer entsprechenden Schaltfläche der grafischen Benutzeroberfläche ausgeführt werden. Die an die Zugriffsberechtigung des Benutzers angepasste grafische Benutzeroberfläche enthält dabei in einer Ausgestaltung nur Schaltflächen für Funktionen, zu deren Aufruf der Benutzer berechtigt ist.

Die Anpassung des Programmmoduls erfolgt, bevor der Computereinheit 20 das Programmmodul bereitgestellt wird. Beispielsweise identifiziert und authentifiziert sich der Benutzer zunächst im Rahmen eines Anmeldevorgangs auf einer von der Konfigurationseinheit 14 bereitgestellten, als Formular ausgeführten Webseite. Nach der Ermittlung der Berechtigungen des Benutzers in der Konfigurationseinrichtung 14 stellt diese dann ein angepasstes Programmmodul zur Verfügung.

Neben der Anpassung an die Berechtigung für einen Zugriff auf Funktionen der Konfigurationseinrichtung 14 und Daten des Teilnehmeridentifikationsmoduls 10 können weitere Anpassungen des Programmmoduls vorgenommen werden. So können unterschiedliche grafische Benutzeroberflächen für Benutzer in verschiedenen Ländern vorgesehen werden. Zum einen kann hier beispielsweise die Sprache der grafischen Benutzeroberfläche länderabhängig angepasst werden. Weiterhin können Teilnehmeridentifikationsmodule 10 in unterschiedlichen Ländern unterschiedliche Daten oder Daten in unterschiedlichen Formaten enthalten. Dies kann innerhalb der grafischen Benutzeroberfläche ebenfalls berücksichtigt werden, indem länderabhängig unterschiedliche Datenfelder in die grafische Benutzeroberfläche eingebracht werden.

Ähnlich wie die in unterschiedlichen Ländern ausgegebenen Teilnehmeridentifikationsmodule 10 können auch Teilnehmeridentifikationsmodule 10 unterschiedlichen Typs verschiedene Daten und Funktionalitäten enthalten. Daher können in einer Ausgestaltung auch Anpassungen des Programmmoduls an den Typ des Teilnehmeridentifikationsmoduls 10 vorgenommen werden. Der Typ des Teilnehmeridentifikationsmoduls kann dabei, wie zuvor bereits beschrieben, anhand von Daten bestimmt werden, die mittels des Kartenlesers 22 aus dem Teilnehmeridentifikationsmodul 10 ausgelesen und mittels der Computereinrichtung 20 über das Netzwerk 16 an die Konfigurationseinrichtung 14 gesendet werden. Gleichfalls kann es vorgesehen sein, dass der Benutzer den Typ des Teilnehmeridentifikationsmoduls 10 im Rahmen des Anmeldevorgangs auf einer Webseite angibt.

Über die Supporteinrichtung 18 erhält der Benutzer des Clients 12 Hilfestellung bei der Konfiguration eines Teilnehmeridentifikationsmoduls 10. Die Supporteinrichtung ist in einer Ausführungsform ebenfalls als Netzwerkclient ausgebildet. Über das Netzwerk 16 wird von der Konfigurationseinrichtung ein Programmmodul an der Supporteinrichtung 18 bereitgestellt.

Dieses Programmmodul ermöglicht es, auf die aus dem Teilnehmeridentifikationsmodul 10 ausgelesenen Daten, die in der Konfigurationseinrichtung 14 vorliegen, zuzugreifen und diese zu manipulieren. Ferner können Funktionen der Konfigurationseinrichtung von der Supporteinrichtung 18 aus ausgeführt und gesteuert werden. Für den Zugriff auf die Daten und deren Manipulation sowie für die Ausführung von Funktionen stellt das Programmmodul eine grafische Benutzeroberfläche an der Supporteinrichtung 14 bereit.

Die Supporteinrichtung 18 wird von einem Experten für Teilnehmeridentifikationsmodule 10 bedient. Der Experte hat von der Supporteinrichtung 18 aus mittels des dort ausgeführten Programmmoduls vorzugsweise Zugriff auf alle in dem Teilnehmeridentifikationsmodul 10 enthaltenen Daten sowie die Berechtigung zu ihrer Änderung. Ferner hat der Experte die Berechtigung zur Ausführung aller zur Konfiguration vorgesehenen Funktionen der Konfigurationseinrichtung 14. Um einen Missbrauch zu verhindern, meldet sich der Experte anhand einer Benutzerkennung und eines Authentifizierungsmerkmals bei der Konfigurationseinrichtung 14 an. Die Benutzerverwaltung in der Konfigurationseinrichtung 14 sieht dabei eine eigene Benutzergruppe für die Experten vor. Wenn der Experte in der Benutzerverwaltung erfolgreich identifiziert und authentisiert worden ist, wird von der Konfigurationseinrichtung 14 ein an die umfassenden Zugriffsrechte des Experten angepasstes Programmmodul zur Ausführung in der Supporteinrichtung 14 über das Netzwerk 16 oder ein weiteres Netzwerk, über das die Supporteinrichtung 18 mit der Konfigurationseinrichtung 14 verbunden ist, bereitgestellt. Bei der Supporteinrichtung 18 handelt es sich damit um einen "Superclient", dessen Benutzer im Gegensatz zu den Benutzern der Clients 12 über umfangreichere Berechtigungen verfügt.

Da von der Supporteinrichtung 18 aus grundsätzlich Zugriff auf alle Daten des Teilnehmeridentifikationsmoduls 10 besteht, ist es vorgesehen, dass mittels des Kartenlesers 22 sämtliche Daten aus dem Teilnehmeridentifikationsmodul 10 ausgelesen und über das Netzwerk 16 an die Konfigurationseinrichtung 14 übertragen werden. Dies geschieht unabhängig von der Berechtigung des Benutzers des Clients 10 zu einem Zugriff auf die Daten. D.h., es werden insbesondere auch solche Daten ausgelesen und an die Konfigurationseinrichtung 14 übermittelt, auf die der Benutzer des Clients 12 keinen Zugriff hat. Innerhalb der Konfigurationseinrichtung 14 kann von der Supporteinrichtung 18 aus mittels des dort ausgeführten Programmmoduls auf den Datensatz des Teilnehmeridentifikationsmoduls zugegriffen werden. Insbesondere kann ein Zugriff auf die temporär gespeicherten Daten vorgenommen werden. Mittels des Programmmoduls können diese Daten geändert werden und es kann eine Speicherung der geänderten Daten in dem Teilnehmeridentifikationsmodul 10 veranlasst werden. Ferner können in der Supporteinrichtung 18 mittels des Programmmoduls Daten generiert werden, die an die Konfigurationseinrichtung 14 übertragen werden. Die Übertragung solcher Daten zu dem Client 12 und das Speichern der Daten in dem Teilnehmeridentifikationsmodul 10 kann ebenfalls von der Supporteinrichtung 18 aus veranlasst und gesteuert werden. Zudem können Funktionen der Konfigurationseinrichtung 14, wie beispielsweise die Aktivierung eines Teilnehmeridentifikationsmoduls 10, von der Supporteinrichtung 18 aus gestartet werden. Auf diese Weise besteht von der Supporteinrichtung 18 aus ein umfassender "Remotezugriff" auf das Teilnehmeridentifikationsmodul 10, so dass der die Supporteinrichtung 18 bedienende Experte die Konfiguration des Teilnehmeridentifikationsmoduls 10 übernehmen kann.

Der zuvor beschriebene Zugriff auf das Teilnehmeridentifikationsmodul 10 von der Supporteinrichtung 18 aus ist vorzugsweise erst möglich, nachdem der Benutzer des Clients eine Erlaubnis hierzu gegeben bzw. die Unterstützung durch den Experten angefordert hat. Über das in der Computereinheit 20 ausgeführte Programmmodul löst der Benutzer des Clients 10 die Anforderung aus, die über das Netzwerk an die Konfigurationseinrichtung 14 übermittelt wird. In der Regel umfasst das Konfigurationssystem eine Mehrzahl von Supporteinrichtungen 18. Nach dem Empfang der Anforderungen ermittelt die Konfigurationseinrichtung 14 eine verfügbare Supporteinrichtung 18. Falls aktuell keine Supporteinrichtung 18 verfügbar ist, wird die Anforderung in einer Warteliste gespeichert. Sobald eine verfügbare Supporteinrichtung 18 für die Bearbeitung der Anforderung ermittelt worden ist, wird die Anforderung an diese Supporteinrichtung 18 weitergeleitet. Ferner erhält diese Supporteinrichtung 18 Zugriff auf die Daten des Teilnehmeridentifikationsmoduls 10, das in dem Client 12 konfiguriert wird, der die Anforderung abgesendet hat.

Zusätzlich kann eine Kommunikation zwischen dem Benutzer des Clients 12 und dem die Supporteinrichtung 18 bedienenden Experten vorgesehen sein. Diese Kommunikation kann beispielsweise telefonisch oder anhand einer Übermittlung von elektronischen Nachrichten (beispielsweise E-Mails) erfolgen.

In einer weiteren Ausführungsform ist innerhalb des Konfigurationssystems eine zentrale Bestandsverwaltung der Teilnehmeridentifikationsmodule 10 vorgesehen, die in den Verkaufsstellen des Mobilfunkanbieters vorhanden sind. Möglich wird dies insbesondere dadurch, dass mittels der zentralen Konfigurationseinrichtung 14 die Aktivierungen von Teilnehmeridentifikationsmodulen 10 vorgenommen werden.

In einer Verkaufsstelle des Mobilfunkanbieters wird üblicherweise eine vorgegebene Anzahl von nicht personalisierten Teilnehmeridentifikationsmodulen 10 vorgehalten, die noch nicht aktiviert sind. Beispielsweise beim Abschluss eines Mobilfunkvertrags in der Verkaufsstelle erhält der Kunde ein Teilnehmeridentifikationsmodul 10, das in der bereits beschriebenen Weise in der Verkaufsstelle aktiviert wird. Nach der Aktivierung verlässt das Teilnehmeridentifikationsmodul 10 somit den Bestand der in der Verkaufsstelle vorgehaltenen, nicht personalisierten Teilnehmeridentifikationsmodule 10. Da die Aktivierung, wie zuvor beschrieben, zentral mittels der Konfigurationseinrichtung 14 durchgeführt wird, liegt im Bereich der Konfigurationseinrichtung 14 eine Information über die Aktivierung vor.

Es ist vorgesehen, dass die Konfigurationseinrichtung 14 während oder nach einer Aktivierung eines Teilnehmeridentifikationsmoduls 10 eines bestimmten Typs automatisch einen Bestellvorgang einleitet, bei dem ein Teilnehmeridentifikationsmodul 10 dieses Typs für die Verkaufsstelle nachbestellt wird, in der das Teilnehmeridentifikationsmodul 10 aktiviert worden ist. Hierzu sendet die Konfigurationseinrichtung 14 eine entsprechende Bestellorder an ein Lager des Mobilfunkanbieters oder einen Lieferanten von Teilnehmeridentifikationsmodulen 10. Dort wird die Bestellorder bearbeitet, wobei ein Teilnehmeridentifikationsmodul 10 zu der entsprechenden Verkaufsstelle transportiert wird, um dort den Bestand an nicht personalisierten Teilnehmeridentifikationsmodulen 10 aufzufüllen.

## Patentansprüche

1. System zum Konfigurieren eines Teilnehmeridentifikationsmoduls (10) mit einer Lese- und Schreibeinrichtung (22), die Lesezugriffe und Schreibzugriffe auf das Teilnehmeridentifikationsmodul (10) ermöglicht, und einer Konfigurationseinrichtung (14), in der ausgelesene Daten des Teilnehmeridentifikationsmoduls (10) auswertbar und in dem Teilnehmeridentifikationsmodul (10) zu speichernde Daten bereitstellbar sind, wobei die Lese- und Schreibeinrichtung (22) in einem Client (12) enthalten ist, der über ein Netzwerk (16) mit der Konfigurationseinrichtung (14) verbindbar ist,
**dadurch gekennzeichnet,**
**dass** über das Netzwerk (16) Lesezugriffe und Schreibzugriffe der Konfigurationseinrichtung (14) auf das Teilnehmeridentifikationsmodul (10) basierend auf einer in der Konfigurationseinrichtung (14) enthaltenen Programmlogik zur Konfiguration des Teilnehmeridentifikationsmoduls (10) durchführbar sind, und wobei die Lese- und/oder Schreibzugriffe von dem Client (12) aus beeinflussbar sind, so dass die Konfiguration des Teilnehmeridentifikationsmoduls (10) mittels des Clients (12) beeinflussbar ist, eine Anpassung der Programmlogik zur Konfiguration des Teilnehmeridentifikationsmoduls (10) aber nur in der Konfigurationseinrichtung (14) erfolgen kann.

2. System nach Anspruch 1,
**dadurch gekennzeichnet,**
**dass** über das Netzwerk (16) ein erstes Programmmodul bereitgestellt werden kann, das in dem Client (12) ausführbar ist und eine Schnittstelle zwischen der Konfigurationseinrichtung (14) und der Lese- und Schreibeinrichtung (22) umfasst, über die Lese- und Schreibzugriffe der Konfigurationseinrichtung (14) auf das Teilnehmeridentifikationsmodul (10) durchführbar sind.

3. System nach Anspruch 1 oder 2,
**dadurch gekennzeichnet,**
**dass** die Lese- und/oder Schreibzugriffe der Konfigurationseinrichtung (14) auf das Teilnehmeridentifikationsmodul (10) mittels des ersten Programmmoduls von dem Client (12) aus beeinflussbar sind.

4. System nach einem der vorangegangenen Ansprüche,
**dadurch gekennzeichnet,**
**dass** eine Supporteinrichtung (18) über das Netzwerk (16) mit der Konfigurationseinrichtung (14) verbunden ist, wobei die Lesezugriffe und/oder die Schreibzugriffe der Konfigurationseinrichtung (14) auf das Teilnehmeridentifikationsmodul (10) von der Supporteinrichtung (18) aus mittels eines zweiten, in der Supporteinrichtung (18) ausführbaren Programmmoduls beeinflussbar sind.

5. System nach einem der vorangegangenen Ansprüche,
**dadurch gekennzeichnet,**
**dass** die Konfigurationseinrichtung (14) einen Lesezugriff und/oder einen Schreibzugriff bezüglich eines Datenelements der Daten des Teilnehmeridentifikationsmoduls (10) in Abhängigkeit von einer Zugriffsberechtigung des Bedieners des Clients (12) zulässt.

6. System nach einem der vorangegangenen Ansprüche,
**dadurch gekennzeichnet,**
**dass** das erste Programmmodul eine Benutzerschnittstelle zum Beeinflussen der Lese- und Schreibzugriffe auf das Teilnehmeridentifikationsmodul (10) bereitstellt, die in Abhängigkeit von der Zugriffsberechtigung des Bedieners des Clients (12) bezüglich des Datenelements veränderbar ist.

7. System nach einem der vorangegangenen Ansprüche,
**dadurch gekennzeichnet,**
**dass** mittels des zweiten Programmmoduls eine Steuerung von Lese- und Schreibzugriffen der Konfigurationseinrichtung (14) auf das Teilnehmeridentifikationsmodul (10) bezüglich aller Datenelemente der Daten des Teilnehmeridentifikationsmoduls (10) durchführbar ist.

8. System nach einem der vorangegangenen Ansprüche,
**dadurch gekennzeichnet,**
**dass** die Lesezugriffe und/oder die Schreibzugriffe der Konfigurationseinrichtung (14) auf das Teilnehmeridentifikationsmodul (10) von der Supporteinrichtung (18) aus beeinflussbar sind, nachdem eine entsprechende Anforderung von dem Client (12) an die Supporteinrichtung (18) und/oder die Konfigurationseinrichtung (14) übermittelt worden ist.

9. System nach einem der vorangegangenen Ansprüche,
**dadurch gekennzeichnet,**
**dass** mittels der Konfigurationseinrichtung (14) eine vor der Ausgabe eines Teilnehmeridentifikationsmoduls (10) an einen Kunden erfolgende Aktivierung des Teilnehmeridentifikationsmoduls (10) durchführbar ist.

10. System nach einem der vorangegangenen Ansprüche,
**dadurch gekennzeichnet,**
**dass** die Konfigurationseinrichtung (14) nach der Aktivierung einen Bestellvorgang für ein Teilnehmeridentifikationsmodul (10) auslöst.

## Claims

1. A system to configure a subscriber identification module (10) having a reading and writing device (22) that permits reading access and writing access to the subscriber identification module (10), and having a configuration device (14) in which read-out data from the subscriber identification module (10) can be evaluated, and data that is to be stored in the subscriber identification module (10) can be made available, whereby the reading and writing device (22) is contained in a client (12) that can be connected to the configuration device (14) via a network (16),
**characterized in that,**
reading access and writing access by the configuration device (14) to the subscriber identification module (10) can be carried out via the network (16) on the basis of a program logic that is contained in the configuration device (14) and that serves to configure the subscriber identification module (10), and whereby the reading access and/or writing access can be influenced using the client (12) so that the configuration of the subscriber identification module (10) can be influenced by means of the client (12), but whereby an adaptation of the program logic that serves to configure the subscriber identification module (10) can only be made in the configuration device (14).

2. The system according to claim 1,
**characterized in that,**
via the network (16), a first program module can be made available that can be executed in the client (12) and that comprises an interface which is situated between the configuration device (14) and the reading and writing device (22) and by means of which the configuration device (14) can have reading access and writing access to the subscriber identification module (10).

3. The system according to claim 1 or 2,
**characterized in that**
the reading access and/or writing access to the subscriber identification module (10) by the configuration device (14) can be influenced by means of the first program module using the client (12).

4. The system according to one of the preceding claims,
**characterized in that**
a support device (18) is connected via the network (16) to the configuration device (14), whereby the reading access and/or writing access to the subscriber identification module (10) can be influenced by means of a second program module that can be executed in the support device (18) using the support device (18).

5. The system according to one of the preceding claims,
**characterized in that,**
as a function of an authorization for access by the user of the client (12), the configuration device (14) permits reading access and/or writing access in terms of a data element of the data of the subscriber identification module (10).

6. The system according to one of the preceding claims,
**characterized in that**
the first program module makes a user interface available in order to influence the reading access and writing access to the subscriber identification module (10), whereby said interface can be changed in terms of the data element as a function of the authorization for access by the user of the client (12).

7. The system according to one of the preceding claims,
**characterized in that,**
by means of the second program module, it is possible to carry out a control of the reading access and writing access to the subscriber identification module (10) by the configuration device (14) in terms of all of the data elements of the data of the subscriber identification module (10).

8. The system according to one of the preceding claims,
**characterized in that**
the reading access and/or writing access to the subscriber identification module (10) by the configuration device (14) can be influenced using the support device (18) after a corresponding request has been transmitted by the client (12) to the support device (18) and/or to the configuration device (14).

9. The system according to one of the preceding claims,
**characterized in that,**
the configuration device (14) can execute an activation of the subscriber identification module (10) that was made before the issuing of a subscriber identification module (10) to a customer.

10. The system according to one of the preceding claims,
**characterized in that,**
after the activation, the configuration device (14) initiates an ordering procedure for a subscriber identification module (10).

## Revendications

1. Système de configuration d'un module d'identification de participant (10) comportant un dispositif de lecture et d'écriture (22) qui permet des accès en lecture et des accès en écriture au module d'identification de participant (10), et un dispositif de configuration (14) dans lequel des données lues du module d'identification de participant (10) peuvent être analysées et des données à sauvegarder dans le module d'identification de participant (10) peuvent être mises à disposition, le dispositif de lecture et d'écriture (22) étant contenu dans un client (12) qui peut être relié au dispositif de configuration (14) via un réseau (16), **caractérisé en ce que**, via le réseau (16), des accès en lecture et des accès en écriture du dispositif de configuration (14) au module d'identification de participant (10) peuvent être exécutés sur la base d'une logique de programme contenue dans le dispositif de configuration (14) pour la configuration du module d'identification de participant (10) et les accès en lecture et/ou en écriture peuvent être influencés par le client (12), de sorte que la configuration du module d'identification de participant (10) peut être influencée au moyen du client (12), mais qu'une adaptation de la logique de programme pour la configuration du module d'identification de participant (10) ne peut avoir lieu que dans le dispositif de configuration (14).

2. Système selon la revendication 1, **caractérisé en ce que** peut être mis à disposition, via le réseau (16), un premier module de programme qui peut être exécuté dans le client (12) et qui comprend une interface entre le dispositif de configuration (14) et le dispositif de lecture et d'écriture (22), via laquelle peuvent être exécutés des accès en lecture et en écriture du dispositif de configuration (14) au module d'identification de participant (10).

3. Système selon la revendication 1 ou 2, **caractérisé en ce que** les accès en lecture et/ou les accès en écriture du dispositif de configuration (14) au module d'identification de participant (10) peuvent être influencés à partir du client (12) au moyen du premier module de programme.

4. Système selon l'une des revendications précédentes, **caractérisé en ce qu'**un dispositif de support (18) est relié au dispositif de configuration (14) par l'intermédiaire du réseau (16), les accès en lecture et/ou les accès en écriture du dispositif de configuration (14) au module d'identification de participant (10) pouvant être influencés à partir du dispositif de support (18) au moyen d'un deuxième module de programme exécutable dans le dispositif de support (18).

5. Système selon l'une des revendications précédentes, **caractérisé en ce que** le dispositif de configuration (14) autorise un accès en lecture et/ou un accès en écriture concernant un élément de données des données du module d'identification de participant (10) en fonction d'une autoristion d'accès de l'opérateur du client (12).

6. Système selon l'une des revendications précédentes, **caractérisé en ce que** le premier module de programme met à disposition une interface d'utilisateur pour influencer les accès en lecture et les accès en écriture au module d'identification de participant (10), laquelle peut être modifiée en fonction de l'autorisation d'accès de l'opérateur du client (12) concernant l'élément de données.

7. Système selon l'une des revendications précédentes, **caractérisé en ce que** peut être exécutée, au moyen du deuxième module de programme, une commande d'accès en lecture et d'accès en écriture du dispositif de configuration (14) au module d'identification de participant (10) concernant tous les éléments de données des données du module d'identification de participant (10).

8. Système selon l'une des revendications précédentes, **caractérisé en ce que** les accès en lecture et/ou les accès en écriture du dispositif de configuration (14) au module d'identification de participant (10) peuvent être influencés à partir du dispositif de support (18) après qu'une requête correspondante a été transmise du client (12) au dispositif de support (18) et/ou au dispositif de configuration (14).

9. Système selon l'une des revendications précédentes, **caractérisé en ce que** peut être exécutée, au moyen du dispositif de configuration (14), une activation du module d'identification de participant (10) ayant lieu avant la délivrance d'un module d'identification de participant (10) à un client.

10. Système selon l'une des revendications précédentes, **caractérisé en ce que** le dispositif de configuration (14) déclenche, après l'activation, une opération de commande pour un module d'identification de participant (10).
